# EUROPEAN PATENT SPECIFICATION

(11) **EP 2 638 097 B1**
(45) Date of publication and mention of the grant of the patent: **09.01.2019**
(21) Application number: 11779676.3
(22) Date of filing: 09.11.2011
(51) Int. Cl.: B29C 43/00, B29C 45/00, B29C 51/00, C08G 63/91, C08L 67/02

(54) **NOVEL OLIGOMERS, METHOD FOR PREPARATION THEREOF AND USE THEREOF FOR FLUIDIFYING POLYMERIC COMPOSITIONS**
NEUE OLIGOMER, VERFAHREN ZU IHRE HERSTELLUNG, IHRE VERWENDUNG FÜR DIE VERFLÜSSIGUNG VON POLYMERISCHEN ZUSAMMENSETZUNGEN
NOUVEAUX OLIGOMÈRES, LEUR PROCÉDÉ DE PRÉPARATION ET LEUR UTILISATION POUR FLUIDIFIER DES COMPOSITIONS POLYMÉRIQUES

(30) Priority: 09.11.2010 FR 1059258
(43) Date of publication of application: 18.09.2013
(73) Proprietor: Faurecia Intérieur Industrie, 92000 Nanterre (FR); Institut National de la Recherche Agronomique (INRA), 75338 Paris Cedex 07 (FR)
(72) Inventor: DUFRANCATEL, Laurence, F-95220 Herblay (FR); KANNENGIESSER, Pauline, 95300 Pontoise (FR); YHUEL, Gregory, 92110 Clichy (FR); MARINKOVIC, Sinisa, F-08300 Avancon (FR); ESTRINE, Boris, F-51480 Nanteuil la Foret (FR); DOLE, Patrice, F-01250 Journans (FR)
(74) Representative: Lavoix
(86) International application number: PCT/EP2011/069754
(87) International publication number: WO 2012/062809

(56) References cited:
- EP-A1- 1 541 631
- EP-A2- 1 972 672
- WO-A1-98/14497
- US-A1- 2002 035 218

## Description

The present invention relates to an additive for fluidifying polymeric compositions.

The preparation of plastic articles, for example vehicle parts, from polymeric compositions requires that these compositions have certain characteristics, notably adequate fluidity to be transformed with usuals methods, injection for example and sufficient stability so that the article is not degraded during its period of use.

Patent application US 2009/0171037 describes a polyester stemming from renewable resources, such as a poly(butylene succinate) polyester (PBS). US'037 teaches that a polyester comprising large amounts of terminal carboxylic functions is not very stable, notably because of degradation of the polymer by hydrolysis. Therefore, minimization of the acid number (AN) is sought. US'037 describes the use of a carbodiimide, an epoxide, a monofunctional alcohol or a carboxylic acid for deactivating and trapping the terminal carboxylic acid functions of a polyester.

EP 1 972 672 describes a powder composition useful as coating for substrates, comprising a polymer and a curing agent adduct of a polyester comprising a polyepoxy compound. In example 1, the curing agent adduct is formed by reacting a polyester obtained from 1,6-hexanediol and 1,12-dodecanoic acid with a blend of diglycidyl terephthalate and triglycidyl trimellitate. Said adduct is described as providing improved impact resistance and flexibility to the coating. Besides, WO 98/14497 describes oligomers carrying cycloaliphatic epoxy functional groups capable of being polymerized under irradiation. The polymers thus obtained are useful as coatings described as exhibiting superior performances as regards durability, porosity and resistance to chemical attacks. Thus, EP 1 972 672 and WO 98/14497 are silent concerning any effect of the additives on fluidity improvement.

EP 1 541 631 describes a composition comprising a polyester resin and an epoxy compound having lactone chains. Introduction of the epoxy compound induces an improved melt viscosity. US 2002/035218 describes a high molecular weight polyester obtained from a linear saturated polyester and a bi- and/or higher functional epoxide ingredient. The viscosity of said high molecular weight polyester is higher than the one of the linear saturated polyester used as raw material. Thus, the additives comprising epoxy function according to EP 1 541 631 and US 2002/035218 lead to a viscosity increase, whereas introducing the additive of the present application in a polymeric composition leads to a fluidity improvement.

The present application provides novel oligomers which may be used for fluidifying and/or improving the stability of polymeric compositions, preferably both for fluidifying and improving the stability.

In the sense of the present application, fluidity and viscosity are linked as followed: a decrease of the viscosity means an increase of the fluidity.

In the sense of the present application stability means the ability of the polymeric composition to minimize the loss of its main mechanical, such as tensile modulus, Izod impact strength, heat deflection temperature (HDT), and chemical properties, such as molecular weight, over time.

For this purpose, according to a first object, the invention relates to a method for preparing an aliphatic polyester oligomer (O2) having a terminal group comprising at least one epoxide function comprising the steps of:
a) preparing a reaction mixture comprising:
   - an aliphatic polyester oligomer (O1) having at least one terminal carboxylic acid function,
   - a polyepoxide,
   - a catalyst,
   said reaction mixture being free from polysaccharide,
b) heating said reaction mixture at a temperature comprised between the melting point of the aliphatic polyester oligomer (O1) and 250°C and at a pressure comprised between 0.001 bars and ambient pressure,
   whereby at least one terminal carboxylic acid function of the aliphatic polyester oligomer (O1) reacts with at least one epoxide function of the polyepoxide in order to form an aliphatic polyester oligomer (O2) having a terminal group comprising at least one epoxide function,
c) recovering the aliphatic polyester oligomer (O2) having a terminal group comprising at least one epoxide function.

In the sense of the present application, by "oligomer" is meant an oligomeric mixture with a weight average molecular weight from 1,000 to 100,000 g/mol, notably from 1,000 to 30,000 g/mol. Thus, the aliphatic polyester oligomer (O1) is a mixture of aliphatic polyester oligomers, it being understood that this mixture comprises at least one aliphatic polyester oligomer having at least one terminal carboxylic acid function. Also, the aliphatic polyester oligomer (O2) is a mixture of aliphatic polyester oligomers, it being understood that this mixture comprises at least one oligomer having a terminal group comprising at least one epoxide function. Said mixtures may therefore comprise other aliphatic polyester oligomers, notably an aliphatic polyester oligomer having terminal functions other than carboxylic acid functions, in particular an aliphatic polyester oligomer having hydroxyl terminal functions.

In the sense of the present application, by "terminal function" is meant a function present at the end of the main oligomeric chain. A linear polymer includes two terminal functions.

An aliphatic polyester is an aliphatic polymer for which the recurrent units of the main chain contain the ester function. The polyester may be a homopolymer such as a polyglycolide (PGA), a poly(lactic acid) or a polycaprolactone (PCL), or a copolymer such as a polyethylene adipate (PEA), a polyhydroxyalkanoate (PHA) or a copolymer of an aliphatic carboxylic diacid and of an aliphatic diol.

Preferably, the aliphatic polyester of the oligomer (O1) is a copolymer of an aliphatic carboxylic diacid and of an aliphatic diol, notably with the following formula (I): 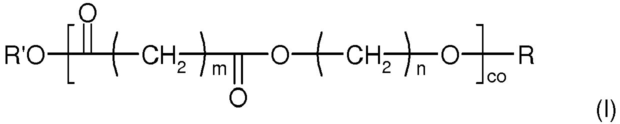 wherein:
- n represents an integer from 3 to 6,
- m represents an integer from 1 to 4, preferably m represents (n - 2),
- R' represents H or an HO-(CH₂)ₙ- group,
- R represents H or a -(CO)-(CH₂)ₘ-COOH group,
provided that when R' represents a HO-(CH₂)ₙ- group, R represents a -(CO)-(CH₂)ₘ-COOH group and when R represents H, R' represents H. This provision imposes that the aliphatic polyester oligomer of formula (I) comprises at least one terminal carboxylic acid function.

The subunits of the copolymer of formula (I) are typically derived from monomers of formula (II) (aliphatic carboxylic diacid) or (III) (cyclic anhydride of the carboxylic diacid), and (IV) (aliphatic diol): 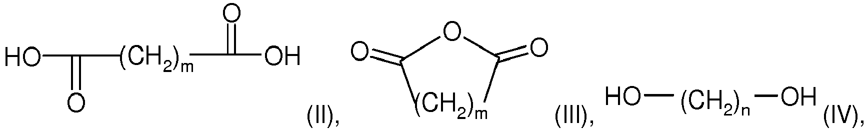 wherein m and n are as defined above.

In a particularly preferred embodiment, the aliphatic polyester of the oligomer (O1) is a copolymer of an aliphatic carboxylic diacid and of an aliphatic diol, notably of the following formula (I'): 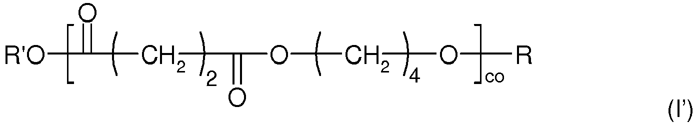 wherein:
- R' represents H or a HO-(CH₂)₄- group,
- R represents H or a -(CO)-(CH₂)₂-COOH group,
provided that when R' represents HO-(CH₂)₄- group, R represents -(CO)-(CH₂)₂-COOH group and that when R represents H, R' represents H.

The aliphatic polyester of formula (I') is a poly(butylene succinate), typically derived from succinic acid monomers (formula (II) wherein m represents 2), succinic anhydride monomers (formula (III) wherein m represents 2) or succinate esters, and 1,4-butanediol (formula (IV) wherein n represents 4).

In this embodiment, the method allows preparation of a poly(butylene succinate) oligomer (O2) having a terminal group comprising an epoxide function.

In the sense of the present application, in the formulae, the expression "co" means that the compound is a copolymer and that it is formed with two of the recurrent units of

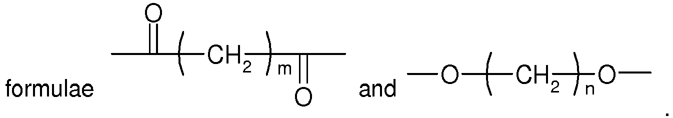

Typically, the aliphatic polyester of the oligomer (O1) of formula (I) comprises from 5 to 290, preferably from 28 to 250 units of formula

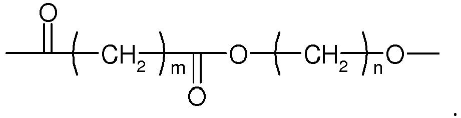

In the sense of the application, by "between (a first value) and (a second value)" is meant that the range comprises the lower (a first value) and upper (a second value) limits. For example, step b) of the method may be conducted at a temperature equal to the melting point of the aliphatic polyester oligomer (O1) or at 250°C.

The reaction mixture prepared in step a) also comprises a polyepoxide.

In the sense of the present application, by "polyepoxide" is meant a chemical compound comprising at least two epoxide functions, this compound may be of small size or may be a polymer.

Typically, the polyepoxide is a compound comprising at least two glycidyl ether functions, such as trimethylopropane triglycidyl ether, trimethylol triglycidyl ether, triglycidyl poly(propyleneglycol) ether, and/or an epoxidized oil, typically epoxidized flax oil, epoxidized soybean oil and epoxidized rapeseed oil. The epoxidized oil may be a naturally epoxidized oil or an oil comprising unsaturations which have been epoxidized.

These polyepoxides are actually particularly suitable for applying the method according to the invention. Generally, polyepoxides of small size, such as compounds comprising at least two glycidyl ether functions, are more reactive than epoxidized oils (notably because the epoxidized functions of these molecules are generally terminal functions, which is not generally the case for epoxidized oils) and advantageously lead to an easier reaction with the oligomer (O1). However as epoxidized plant oils are often less costly, their use may be preferred.

These polyepoxides are available commercially for example from COGNIS®, ARKEMA®, HUNTSMANN®, SACHEM® or RASCHIG®.

Advantageously, most polyepoxides are less costly than other chemical compounds used for trapping terminal carboxylic acid functions of a polyester, for example than the carbodiimides proposed and preferred in US 2009/0171037.

Further, certain polyepoxides stem from renewable resources, for example epoxidized flax oil. Thus, by using an oligomer (O1) stemming from a biosource, for example a poly(butylene succinate) stemming from a biosource (for example as described in US 2009/0171037), it is possible to prepare an aliphatic polyester oligomer (O2) stemming from a biosource.

The reaction mixture prepared in step a) also comprises a catalyst. The catalyst may be metal (for example complexes and salts of transition metals (notably titanium, zinc, tin, cobalt, aluminum...)), basic (for example sodium hydroxide, potassium hydroxide, amines, (eg: benzyl amine, triethylamine, pyridine....)) or acid (for example paratoluenesulfonic acid, sulfuric acid, hydrochloric acid, phosphoric acid, methanesulfonic acid).

The reaction mixture of step a) is free from polysaccharide.

Preferably, the reaction mixture of step a) is free from polymer other than the aliphatic polyester oligomer (O1) (optionally comprising one or several aliphatic polyester oligomers having terminal functions other than carboxylic acid functions, in particular an aliphatic polyester oligomer having hydroxyl terminal functions), other than the polyepoxide, when the latter is a polymer (for example an epoxidized oil).

Preferably, the reaction mixture of step a) is free from chemical compound other than the aliphatic polyester oligomer (O1) capable of reacting with the polyepoxide under the conditions applied during step b).

During step b), the reaction mixture is heated under temperature and pressure conditions allowing at least one terminal carboxylic acid function of the aliphatic polyester oligomer (O1) to react with at least one epoxide function of the polyepoxide, in order to form an aliphatic polyester oligomer (O2) having a terminal group comprising at least one epoxide function.

In the sense of the present application, by « terminal group » is meant the group grafted to the aliphatic polyester oligomer derived from the polyepoxide (at least one epoxide function of which has reacted) present at one of the ends of the polyester oligomer (O2), it being understood that this is not necessarily the end of the main chain. The terminal group may have a variable size and comprise one or more functions. Thus, according to the invention, the oligomers (O2) comprise at least one terminal group which comprises at least one epoxide function. The terminal group may for example be the epoxidized oil grafted to the aliphatic polyester oligomer.

Generally, when the polyepoxide is a small sized compound (for example trimethylolpropane triglycidyl ether or trimethylol triglycidyl ether), the aliphatic polyester oligomer (O2) has at least one epoxide terminal function. On the other hand, when a polymeric polyepoxide is used at the end of step b), a block oligomer is obtained, one block being derived from the aliphatic polyester, another block being derived from the polymeric polyepoxide, designated as a « terminal group » in the present application. The polymeric polyepoxide block comprises at least one epoxide function, but the latter is not necessarily at the end of the main chain on the polymeric polyepoxide block, and is therefore not necessarily a terminal function. The remaining epoxide function(s) may for example be on pendant groups of the polymeric polyepoxide block. Thus, the aliphatic polyester oligomer (O2) having a terminal group comprising at least one epoxide function is, in only certain embodiments, an aliphatic polyester oligomer (O2) having an epoxide terminal function.

During step b), the reaction mixture is heated to a temperature comprised between the melting point of the aliphatic polyester oligomer (O1) and 250°C, typically between 110 and 250°C, preferably between 120 and 175°C. The reaction is not very favorable if the aliphatic polyester oligomer (O1) is solid. It is therefore preferable that the temperature be greater than the temperature of the melting point of the aliphatic polyester oligomer (O1). Further, in particular when the aliphatic polyester oligomer (O1) is a copolymer of a carboxylic diacid and of a diol, it may include in addition to a terminal carboxylic acid function, an alcohol terminal function. It is preferable that step b) be applied at a temperature of less than 250°C, or even 150°C, so that the alcohol does not react with the polyepoxide and this reaction in competition with the reaction between the carboxylic acid function and the polyepoxide is avoided.

During step b), the pressure is comprised between 0.001 bars and ambient pressure, preferably between 0.01 bars and ambient pressure, for example of the order of 0.02 bars. The minimum pressure, of course, depends on the volatility of the polyepoxide. The minimum pressure is therefore adapted according to the nature of the polyepoxide.

Step b) generally lasts from 10 mins to 5 hours, notably from 15 mins to 2 hours, preferably of the order of 1 hour.

According to a second object, the invention relates to an aliphatic poly(butylene succinate oligomer (O2) having a terminal group comprising at least one epoxide function obtainable by the method defined above.

The inventors have shown that by introducing these oligomers (O2) into a polymeric composition, it is possible to fluidify said composition without altering the other properties of the material (mechanical, thermal properties...). The maintained properties of the material are in particular the tensile modulus, the Izod impact strength and the heat defection temperature (HDT).

Thus, according to a third object, the invention relates to the use of an aliphatic polyester oligomer (O2) having a terminal group comprising at least one epoxide function as an additive in a polymeric composition for fluidifying said composition.

The use of a poly(butylene succinate) oligomer (O2) having a terminal group comprising at least one epoxide function is particularly preferred.

Preferably, the aliphatic polyester oligomer (O2) used, having a terminal group comprising at least one epoxide function, may be obtained with the method defined above.

Thus, by introducing the aliphatic polyester oligomer (O2) into a polymeric composition it is possible to improve the fluidity of the composition, the other mechanical properties being maintained.

The polymeric composition typically comprises a polymer (P) (used as a polymeric matrix), which preferably is an aliphatic polyester such as poly(butylene succinate) or poly(lactic acid) (PLA).

Improvement of the fluidity may notably be observed by comparing the viscosity of the polymeric composition free from the aliphatic polyester oligomer (O2) or comprising it, subject to shearing at the specific transformation temperature of the polymer (P) of the polymeric composition.

Typically, at the specific transformation temperature of the polymer (P) of the polymeric composition, the viscosity of the polymeric composition is lowered by 10% to 80% relatively to the viscosity at the same temperature of a polymeric composition free from said additive.

The specific transformation temperature is the temperature at which the polymer (P) is sufficiently fluid so as to be able to be injected into a cavity (for example between 220 and 240°C for polypropylenes, between 260 and 280°C for polycarbonates (PC) and acrylonitrile-butadiene-styrene polymers (ABS), between 150 and 170°C (and typically of the order of 160°C) for poly(butylene succinates) (PBS) and poly(lactic acid) (PLA)). This specific transformation temperature is specific to each polymer.

The improvement in the fluidity of the polymeric composition is observed even by adding low weight proportions of oligomer (O2). Typically, 1 to 30% by weight, preferably from 2 to 25% by weight of oligomer (O2) are added to the polymeric composition. In particular, the addition of 1 to 30% by weight, preferably from 2 to 25% by weight of oligomer (O2) generally allows the viscosity to be lowered by 10% to 80% at the specific transformation temperature of the polymer (P), in particular when the polymer (P) is a poly(butylene succinate) or a poly(lactic acid) (PLA). One skilled in the art is capable of adapting the proportion of oligomer (O2) to be added to the polymeric composition by finding a compromise between the desired fluidity and the mechanical properties of the composition.

The introduction of the aliphatic polyester oligomer (O2) into the polymeric composition improves the fluidity of the composition, generally regardless of the number average molecular weight of the oligomer (O2).

Further, by introducing the aliphatic polyester oligomer (O2) in a polymeric composition, it is possible to improve its stability, i.e. reduce its degradation rate. Without having the intention of being bound by a particular theory, two assumptions may be raised for explaining this reduction. First of all, the carboxylic acid functions are partly responsible for the degradation of the oligomer, a constituent of the polymeric composition. Now, as these functions have been trapped by the polyepoxide, the degradation of the oligomer and therefore of the polymeric composition is therefore reduced. Further, the aliphatic polyester oligomer (O2) comprises a terminal group comprising at least one epoxide function. This(these) epoxide function(s) is(are) capable of trapping water molecules and residual acid functions (notably carboxylic acids) present in the polymer (P). Now, the presence of water is one of the causes of degradation of certain polymeric compositions (degradation by hydrolysis, notably for polymers (P) of the polyester, polyamide, polyurethane type). Thus, by removing the water molecules by means of the epoxide functions it is also possible to stabilize the polymeric composition. This property of binding water molecules would not exist if a mono-epoxide (as proposed in US 2009/0171037) was used in step a) of the method according to the invention instead of the polyepoxide. Indeed, as the epoxide function of the monoepoxide is consumed for trapping the carboxylic acid function, the oligomer obtained at the end of the process would be free from epoxide function.

The stability improvement of the polymeric composition may for example be observed during ageing test by comparing the time-dependent changes in the ratios of the number average molecular weight at an instant t over the number average molecular weight at an initial time versus time in days, of polymeric compositions free from the oligomer (O2) or comprising it. Other methods exist to measure the stability improvement of the polymeric composition, such as measuring the viscosity in solution of the polymeric composition or its melt flow index (MFI).

Typically, 1 to 30% by weight, preferably 2 to 25% by weight of oligomer (O2) are added to the polymeric composition. One skilled in the art is capable of adapting the proportion of oligomer (O2) to be added to the polymeric composition by finding a compromise between the desired stability and the mechanical properties of the composition.

According to a fourth object, the invention relates to a polymeric composition comprising:
- a poly(butylene succinate oligomer (O2) having a terminal group comprising at least one epoxide function as defined above, and
- at least one other polymer (P), preferably an aliphatic polyester, such as a poly(butylene succinate) or a poly(lactic acid) (PLA),
- optionally natural fibers.

Generally, the nature of the aliphatic polyester oligomer (O2) (and therefore that of the aliphatic polyester oligomer (O1) from which it is derived) is selected so that its structure is close of that of the polymer (P) used in the polymeric composition. Indeed, the more the aliphatic polyester oligomer (O2) and the polymer (P) are structurally close, the more the aliphatic polyester oligomer (O2) will be easily dispersible and more compatible in the polymer (P), by which a homogeneous polymeric composition may be obtained. Thus, preferably the polymer (P) is an aliphatic polyester. When the polymer (P) is an aliphatic polyester, the oligomer (O1) is preferably an aliphatic polyester oligomer of formula (I), and the aliphatic polyester oligomer (O2) is a derivative of an aliphatic polyester of formula (I) bearing at least one terminal group stemming from the grafting of the polyepoxide. More preferably, the polymer (P) is a poly(butylene succinate) (PBS) or a poly(lactic acid) (PLA). When the polymer (P) is a poly(butylene succinate) (PBS), the oligomer (O1) is preferably a poly(butylene succinate oligomer) of formula (I'), and the aliphatic polyester oligomer (O2) is a poly(butylene succinate) derivative of formula (I') bearing at least one terminal group stemming from the grafting of the polyepoxide.

The dispersibility of the aliphatic polyester oligomer (O2) in the polymeric composition is an advantage of the oligomers (O2) according to the present application. As a comparison, if a polyepoxide was directly introduced into a polymeric composition instead of the aliphatic polyester oligomer (O2), the latter would disperse much less in the polymeric composition. The obtained composition would therefore be less homogeneous, and the amount of polyepoxide capable of being introduced would be therefore much lower than the amount of oligomers (O2) capable of being introduced in the polymeric composition.

Further, the introduction of natural fibers into a polymeric composition gives interesting properties to this composition, for example better thermomechanical properties. However, the introduction of these natural fibers often causes a loss of fluidity. Thus, the use of the oligomers (O2) according to the invention in a polymeric composition comprising natural fibers is particularly suitable, since it allows improvement in the fluidity thereof.

The natural fibers are preferably:
- fibers of plant origin, notably selected from the group formed by cotton, coconut, flax, hemp, Manilla hemp or abaca, banana tree, jute, ramie, raffia, sisal, broom, bamboo, miscanthus, kenaf, copra, agave, sorghum, switch-grass and wood, and/or
- fibers of animal origin, notably selected from the group formed by wool, alpaca fleece, mohair, cashmere, angora and silk.
Hemp fibers are particularly preferred.
The polymeric composition typically comprises from 10 to 40%, notably from 20 to 35%, preferably from 25 to 30% by weight of fibers.

The polymeric composition may comprise other additives, such as:
- an impact resistance additive (for example acrylic copolymers, elastomers), and/or
- an anti-hydrolysis additive (for example carbodiimides, epoxides) and/or
- a fluidifying agent (for example oligomers, lubricants, plasticizers), and/or
- an antifungal agent, and/or
- anti-oxidants (phosphoric, phenolic...) and/or
- fillers (talcum, calcium carbonate...), and/or
- nanofillers (montmorillonite, cloisite...), and/or
- an anti-UV agent (phenolic, hindered amines...), and/or
- a coloring agent or pigment, and/or
- a flame-retardant, and/or
- a compatibilizing agent (maleic anhydride, silanes...).

According to a fifth object, the invention relates to a method for preparing a polymeric composition, comprising a step of:
i) preparing a reaction mixture comprising:
   - a poly(butylene succinate oligomer (O2) having a terminal group comprising at least one epoxide function as defined above, and
   - at least one other polymer (P), preferably an aliphatic polyester, such as poly(butylene succinate) (PBS) or poly(lactic acid) (PLA),
   - optionally natural fibers.
ii) extruding the reaction mixture at a temperature comprised between 120 and 200°C, whereby the polymer (P) optionally reacts with at least some of the epoxide functions of the poly(butylene succinate) oligomer (O2),
iii) recovering the polymeric composition.

The preferred polymers (P) are as defined above. The additives mentioned above may be added into the reaction mixture of step i).

The extrusion of step ii) is preferably carried out at a temperature comprised between 130 and 160°C.

During step ii), in one embodiment, the polymer (P) reacts with at least some of the epoxide functions of the poly(butylene succinate) oligomer (O2). This reaction would not exist if a monoepoxide (as proposed in US 2009/0171037) was used in step a) of the method according to the invention instead of the polyepoxide. Indeed, as the epoxide function of the monoepoxide is consumed for trapping the carboxylic acid function, the obtained oligomer would be free from epoxide function, and would therefore not be able to react with the polymer (P) during the extrusion.

In another embodiment, no reaction occurs between the polymer (P) and the epoxide functions of the poly(butylene succinate) oligomer (O2) during step ii).

According to a sixth object, the invention relates to the polymeric composition obtainable with the method defined above.

According to a seventh object, the invention relates to the use of a polymeric composition as defined above (composition of the fourth or of the sixth object) for preparing plastic articles, notably vehicle parts such as automobile parts.

According to an eighth object, the invention relates to a plastic article, notably an vehicle part, such as an automobile part, comprising a polymeric composition as defined above. The plastic article may be obtained by injection, back injection, thermocompression, thermoforming, preferably by injection. The plastic articles may be as an example all interior trim of an automobile such as instrument panel, door panel, tunnel console, pillars garnish, head lining. The plastic article may, as known by a man skilled in the art, be used without covering or with a covering layer. The plastic article may also include complex 3 dimensional shape or complex function such a resilient clip.

The invention will be better understood by considering the examples and figures hereafter.

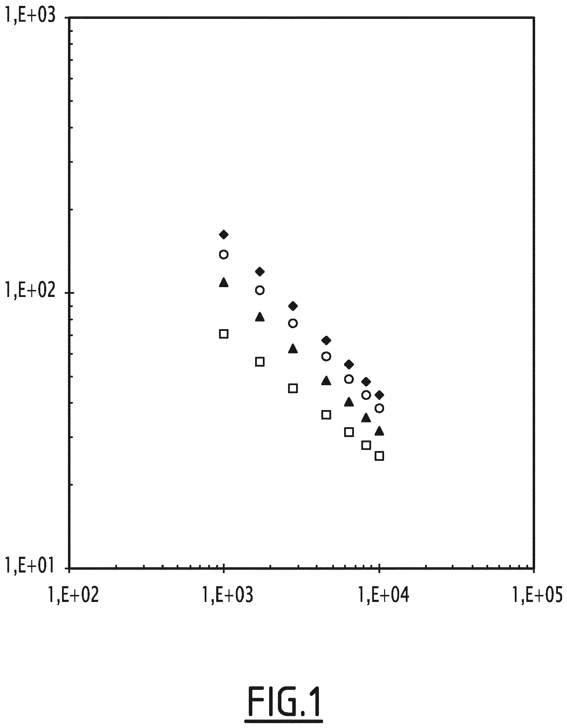

Fig. 1 illustrates the viscosity (in Pa.s) at 160°C versus the shearing rate (in s⁻¹):
   - of a polymeric composition consisting of a polymer (P) of the PBS (control) type (filled lozenges),
   - of a composition consisting of a polymer (P) of the PBS type and of 3% by weight of the oligomer (02)-8 of Example 8 (empty circles),
   - of a composition consisting of a polymer (P) of the PBS type and of 10% by weight of the oligomer (O2)-8 of Example 8 (filled triangles),
   - of a composition consisting of a polymer (P) of the PBS type and of 20% by weight of the oligomer (O2)-8 of Example 8 (empty squares)
   (Example 15).

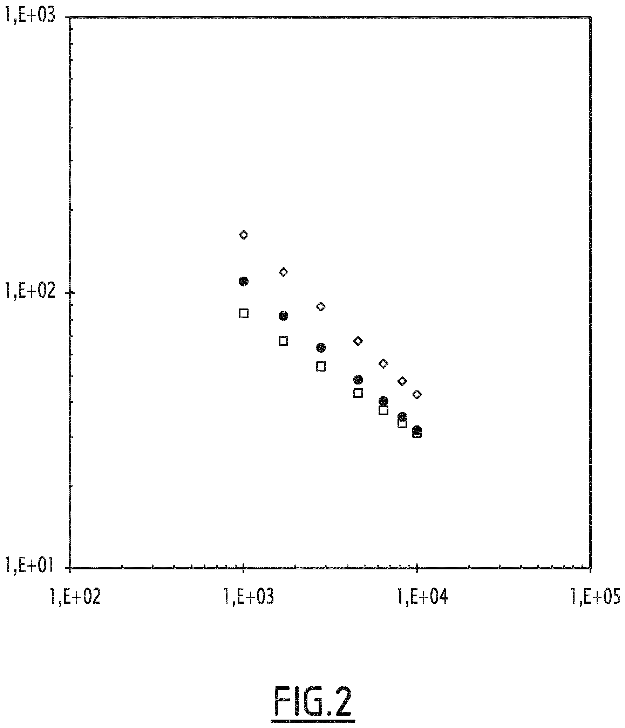

Fig. 2 illustrates the viscosity (in Pa.s) at 160°C versus the shearing rate (in s⁻¹):
   - of a polymeric composition consisting of a polymer (P) of the PBS (control) type (empty lozenges),
   - of a composition consisting of a polymer (P) of the PBS type and of 10% by weight of the oligomer (O2)-4 of Example 4 (Mn = 2,600 g/mol) (empty squares),
   - of a composition consisting of a polymer (P) of the PBS type and of 10% by weight of the oligomer (O2)-8 of Example 8 (Mn = 4,100 g/mol) (filled circles)
   (Example 15).

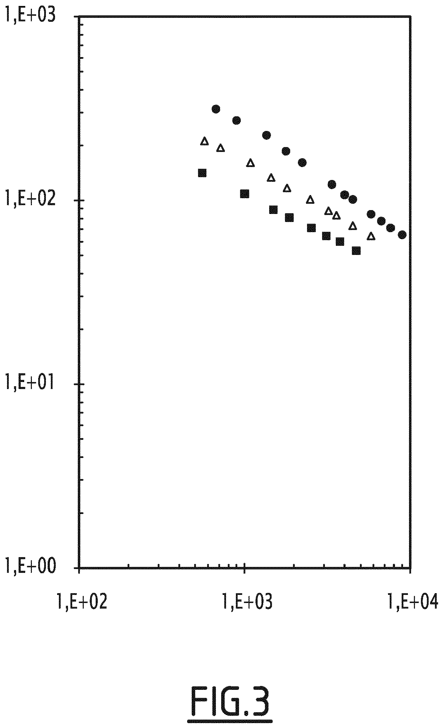

Fig. 3 illustrates the viscosity (in Pa.s) at 160°C versus the shearing rate (in s⁻¹):
   - of a polymeric composition consisting of a polymer (P) of the PBS type and of 30% by weight of hemp fibers (control) (filled circles),
   - of a composition consisting of a polymer (P) of the PBS type, of 30% by weight of hemp fibers and of 10% by weight of the oligomer (O2)-8 of Example 8 (empty triangles),
   - of a composition consisting of a polymer (P) of the PBS type, of 30% by weight of hemp fibers and of 20% by weight of the oligomer (O2)-8 of Example 8 (filled squares)
   (Example 16).

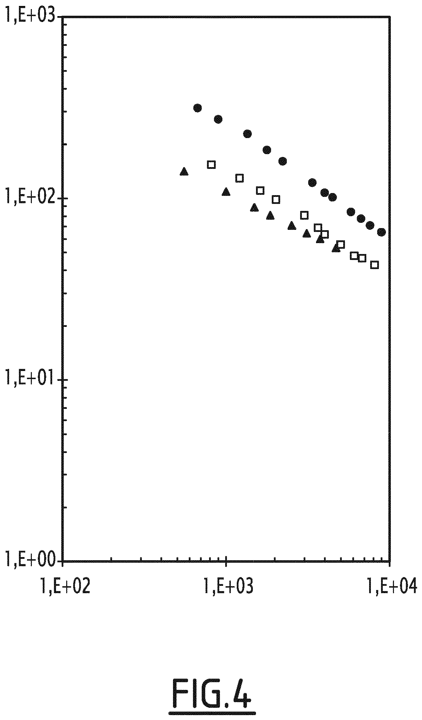

Fig. 4 represents the viscosity (in Pa.s) at 160°C versus the shearing rate (in s⁻¹):
   - of a polymeric composition consisting of a polymer (P) of the PBS type and of 30% by weight of hemp fibers (control) (filled circles),
   - of a composition consisting of a polymer (P) of the PBS type, of 30% by weight of hemp fibers and of 20% by weight of the oligomer (O2)-8 of Example 8 (Mn = 4,100 g/mol) (filled triangles),
   - of a composition consisting of a polymer (P) of the PBS type, of 30% by weight of hemp fibers and of 20% by weight of the oligomer (O2)-2 of Example 2 (Mn = 13,107 g/mol) (empty squares)
   (example 16).

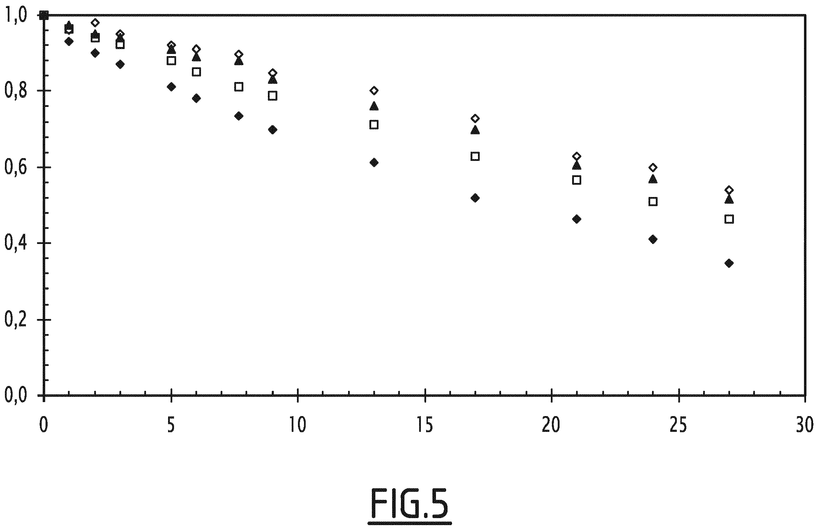

Fig. 5 illustrates the ratio of the number average molecular weight at instant t over the number average molecular weight at t = 0 versus time in days:
   - of a polymeric composition consisting of a polymer (P) of the PBS (control) type (filled lozenges),
   - of a composition consisting of a polymer (P) of the PBS type and of 10% by weight of the oligomer (O2)-8 of Example 8 (empty squares),
   - of a composition consisting of a polymer (P) of the PBS type and of 20% by weight of the oligomer (O2)-8 of Example 8 (filled triangles),
   - of a composition consisting of a polymer (P) of the PBS type and of 20% by weight of the oligomer (O2)-2 of Example 2 (empty lozenges)
   (Example 18).

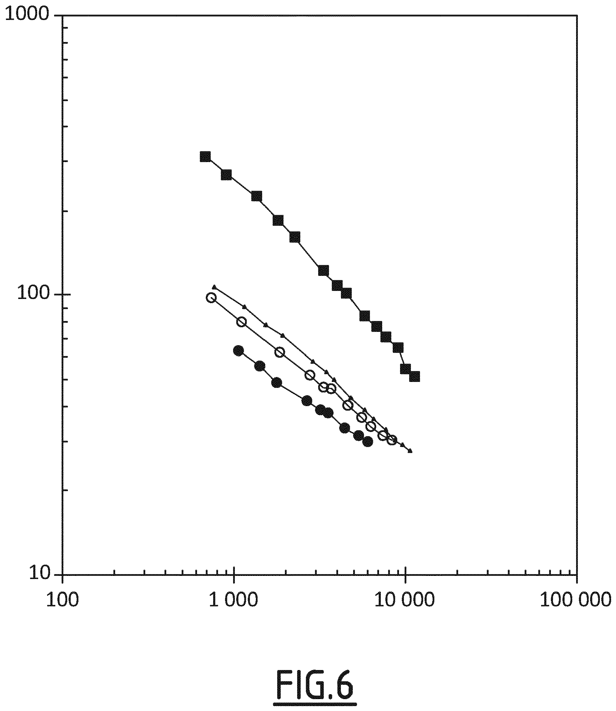

Fig. 6 illustrates the viscosity (in Pa.s) at 160°C versus the shearing rate (in s⁻¹):
   - of a polymeric composition consisting of a polymer (P) of the PBS (control) type (filled squares),
   - of a composition consisting of a polymer (P) of the PBS type and of 10% by weight of the oligomer (O2)-12 of Example 12 (empty circles),
   - of a composition consisting of a polymer (P) of the PBS type and of 10% by weight of the oligomer (O2)-13 of Example 13 (filled circles),
   - of a composition consisting of a polymer (P) of the PBS type and of 10% by weight of the oligomer (O2)-14 of Example 14 (filled triangles),
   (Example 15).
Fig. 7 illustrates the viscosity (in Pa.s) at 160°C versus the shearing rate (in s⁻¹):
   - of a polymeric composition consisting of a polymer (P) of the PLA type (control) (empty circles),
   - of a composition consisting of a polymer (P) of the PLA type and of 10% by weight of the oligomer (O2)-12 of Example 12 (filled squares),
   (Example 17).

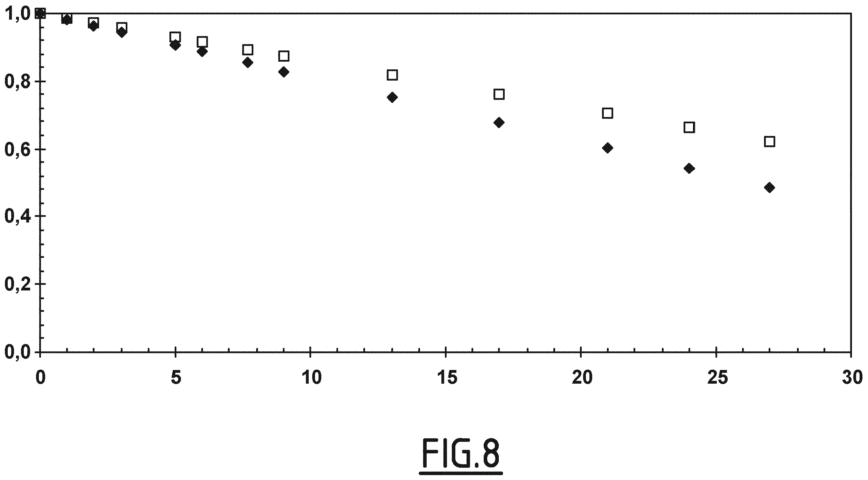

Fig. 8 illustrates the ratio of the number average molecular weight at instant t over the number average molecular weight at t = 0 versus time in days:
   - of a polymeric composition consisting of a polymer (P) of the PLA (control) type (filled lozenges),
   - of a composition consisting of a polymer (P) of the PLA type and of 10% by weight of the oligomer (O2)-12 of Example 12 (filled squares),
   (Example 19).

Determination of the acid number values is described in the NF EN ISO 2114 standard.

### EXAMPLE 1: Preparation of an aliphatic polyester oligomer (O2)-1 from a trimethylolpropane triglycidyl ether polyepoxide, 1,4- butanediol and succinic acid

A poly(butylene succinate) oligomer (corresponding to the oligomer (O1) according to the present application) was obtained by subjecting 1.05 equivalents of 1,4- butanediol and 1.0 equivalents of succinic acid in the presence of 0.5 equivalents of paratoluene-sulfonic acid:
1/ for 1 hour to a temperature of 125°C and to atmospheric pressure, and then
2/ for 2 hours to a temperature of 125°C and to a pressure decreasing from 0.45 bars to 0.1 bars, and then
3/ for 3 hours to a temperature of 125°C and to a pressure of 0.02 bars.
An oligomer (O1)-1 with an acid number of 4.5 mg KOH/g, with a number average molecular weight Mn of 13,461, with a weight average molecular weight Mw of 26,680 and with a polydispersity index Ip of 1.98 was obtained.

10% molar of trimethylolpropane triglycidyl ether (Araldite® DY-T or from Sigma Aldrich®) were added to this oligomer (O1)-1 (the above molar ratio of trimethylolpropane triglycidyl ether is relative to the succinic acid used for preparing the (O1)-1)) and then the mixture was subject to a temperature of a 125°C for 0.5 hours at a pressure of 0.02 bars in the presence of 0.5% molar of paratoluene sulfonic acid relatively to the succinic acid used for preparing (O1)-1.

An aliphatic polyester oligomer (O2)-1 with an acid number of 1.5 mg KOH/g was obtained, with an Mn of 12,410; with an Mw of 26,258; and with an Ip of 2.11. The acid number has therefore actually been reduced, while the molecular weights have not changed very much. The preservation of the polydispersity index indicates that a polyepoxide molecule was grafted via the oligomer (O1)-1, without having any branch reactions.

### EXAMPLE 2: Preparation of an aliphatic polyester oligomer (O2)-2 from epoxidized flax oil, 1,4- butanediol and succinic acid

The oligomer (O1)-2 was prepared by following the procedure described for Example 1 above. An oligomer (O1)-2 with an acid number of 8.6 mg KOH/g, an Mn of 13,326; an Mw of 23,238 and an Ip of 1.74 was obtained.

5% molar of epoxidized flax oil were added to this oligomer (O1)-2 and the mixture was then subject to a temperature of 125°C for 0.5 hours at a pressure of 0.02 bars in the presence of 0.5% molar of paratoluene sulfonic acid relatively to the succinic acid used for preparing the (O1)-2. The above molar ratio of epoxidized flax oil is relative to the succinic acid used for preparing the (O1)-2.

An aliphatic polyester oligomer (O2)-2 with an acid number of 3.4 mg KOH/g, with an Mn of 13,107; an Mw of 20,182; an Ip of 1.75 was obtained. The acid number therefore has actually been reduced.

### EXAMPLES 3 to 11: Preparation of aliphatic polyester oligomers (O2)-3 to 11 from epoxidized flax oil or from trimethylolpropane triglycidyl ether, 1,4- butanediol and succinic acid

A poly(butylene succinate) oligomer (corresponding to the oligomer (O1)-3 according to the present application) was obtained by subjecting 1.275 equivalents of 1,4- butanediol and 1.0 equivalents of succinic acid in the presence of 5.10⁻³ equivalents of paratoluene-sulfonic acid relatively to the succinic acid used for preparing (O1)-3 :
1/ for 1 hour to a temperature of 125°C and to atmospheric pressure, and then
2/ for 2 hours to a temperature of 125°C and to a pressure decreasing from 0.45 bars to 0.1 bars, and then
3/ for 3 hours to a temperature of 125°C and to a pressure of 0.02 bars.
An oligomer (O1)-3 with an acid number of 5.4 mg KOH/g, with a number average molecular weight Mn of 2,760, with a weight average molecular weight Mw of 4,360 and with a polydispersity index Ip of 1.58 was obtained.

Quantity of epoxide functions has been calculated with the following assumptions:
- the number of average epoxide functions of trimethylolpropane triglycidyl ether equals 3
- the number of average epoxide functions of epoxidized flax oil equals 5.
Epoxide functions quantity (hereafter epoxide quantity in the following tables) is calculated relatively to the measured acid number of (O1)-3 (eq/AN).

The preparation of the oligomers (O2)-3 to 11 was carried out from the oligomer (O1)-3 by following the procedures of Examples 1 and 2, but with the conditions provided in the following Table 1:

| Ex. | (O2) | Polyepoxide | Epoxide quantity (eq/ AN) | T (°C) | duration (h) | P (bars) | Cata | Cata quantity (eq/AN) | AN (mg KOH/g) | Mn (g/mol) | Mw (g/mol) | lp |
|---|---|---|---|---|---|---|---|---|---|---|---|---|
| 3 | (O2) -3 | TMP | 5 | 125 | 3 | 0.02 | Ti(OBu)₄ | 0.50 | 0.9 | 3300 | 7000 | 2.12 |
| 4 | (O2) -4 | TMP | 5 | 125 | 3 | 0.02 | TEA | 1.50 | 0.6 | 2600 | 4500 | 1.73 |
| 5 | (O2) -5 | TMP | 5 | 125 | 3 | 0.02 | Ti(OBu)₄ +TEA | 0.5 + 1 | 1.5 | 2700 | 4800 | 1.78 |
| 6 | (O2) -6 | TMP | 5 | 125 | 3 | 0.02 | ZnCl₂+TEA | 0.5 + 1 | 1.5 | 2800 | 5200 | 1.86 |
| 7 | (O2) -7 | TMP | 2,5 | 125 | 3 | 0.02 | Ti(OBu)₄ | 0.50 | 2.5 | 3100 | 5700 | 1.84 |
| 8 | (O2)-8 | TMP | 2,5 | 150 | 3 | 0.02 | Ti(OBu)₄ | 0.50 | 2.9 | 4100 | 7400 | 1.80 |
| 9 | (O2) -9 | TMP | 2,5 | 125 | 3 | 0.02 | TEA | 1.50 | 1.9 | 2500 | 4100 | 1.64 |
| 10 | (O2) -10 | TMP | 2,5 | 150 | 3 | 0.02 | TEA | 1.50 | 2.5 | 2500 | 4100 | 1.64 |
| 11 | (O2) -11 | HLO | 5 | 150 | 3 | 0.02 | Ti(OBu)₄ | 0.50 | 4 | 4800 | 10300 | 2.15 |

| | | | | | | | | | | | | |
|---|---|---|---|---|---|---|---|---|---|---|---|---|
| TMP: trimethylolpropane triglycidyl ether (Araldite® DY-T or from Sigma Aldrich®) HLO: epoxidized flax oil TEA: Triethanolamine Cata: catalyst Ti(OBu)₄ from Univar® or from Sigma Aldrich® Table 1: Applied conditions for preparing the oligomers (O2)-3 to 11 from the oligomer (O1)-3. | | | | | | | | | | | | |

### EXAMPLE 12 to 14: Preparation of aliphatic polyester oligomers (O2)-12 to 14 from trimethylolpropane triglycidyl ether and :

- ethylene glycol and succinic acid
- 1,4-butanediol and adipic acid
- ethylene glycol, 1,4-butanediol and succinic acid.

The oligomer (O1)-4 to 6 were prepared by following the procedure described for Example 3 above but with other monomers as described below:
- (O1)-4: ethylene glycol and succinic acid
- (O1)-5: 1,4-butanediol and adipic acid
- (O1)-6: ethylene glycol and 1,4-butanediol (50/50 %mol. for each diol) and succinic acid
The preparation of the oligomers (O2)-12 to 14 was carried out, respectively, from the oligomer (O1)-4 to 6 by following the procedures of Examples 1 and 2, but with the conditions provided in the following Table 2:

| Ex. | (O2) | Polyepoxide | Epoxide quantity (eq/AN) | T (°C) | duration (h) | P (bars) | Cata | Cata quantity (eq/AN) | AN (mg KOH/g) |
|---|---|---|---|---|---|---|---|---|---|
| 12 | (O2)-12 | TMP | 5 | 125 | 1.5 | 0.02 | TEA | 1.50 | 0.4 |
| 13 | (O2)-13 | TMP | 5 | 125 | 1.5 | 0.02 | TEA | 1.50 | 0.4 |
| 14 | (O2)-14 | TMP | 5 | 125 | 1.5 | 0.02 | TEA | 1.50 | 0.2 |

| | | | | | | | | | |
|---|---|---|---|---|---|---|---|---|---|
| Table 2: Applied conditions for preparing the oligomers (O2)-12 to 14 from the oligomer (O1)-4 to 6, respectively. | | | | | | | | | |

### EXAMPLE 15: Improvement in the viscosity of a polymeric composition consisting of a polymer (P) of the PBS type by addition of an oligomer (O2) according to the invention.

In the following examples 15, 16 and 17, polymer (P) of the PBS type came from Showa Highpolymer® (grade #1000).
In examples 15, 16 and 17, a ROSAND® 40KN capillary rheometer was used and the followed norm was ASTM D3835-08 (ISO 11443:2005).

The viscosities for different shearing rates:
- of a polymeric composition consisting of a polymer (P) of the PBS type (control),
- of a composition consisting of a polymer (P) of the PBS type and of 3% by weight of the oligomer (O2)-8 of Example 8,
- of a composition consisting of a polymer (P) of the PBS type and of 10% by weight of the oligomer (O2)-8 of Example 8,
- of a composition consisting of a polymer (P) of the PBS type and of 20% by weight of the oligomer (O2)-8 of Example 8,
at 160°C (the specific transformation temperature of the PBS used as a polymer (P)) were measured. Fig. 1 shows a clear improvement in the fluidity of the polymeric composition when the oligomer (O2) is added to the polymeric composition. The improvement is all the more significant since the weight proportion of added oligomer (O2) is high. By adding 3wt% of oligomer, it is possible to observe a significant improvement in the fluidity (of more than 10%, regardless of the shearing rate). By adding 20wt% of oligomer, it is possible to observe an improvement in fluidity from 53 to 69%, depending on the shearing rate.

The viscosities for different shearing rates:
- of a polymeric composition consisting of a polymer (P) of the PBS type (control),
- of a composition consisting of a polymer (P) of the PBS type and of 10% by weight of the oligomer (O2)-4 of Example 4 (Mn = 2,600 g/mol),
- of a composition consisting of a polymer (P) of the PBS type and of 10% by weight of the oligomer (O2)-8 of Example 8 (Mn = 4,100 g/mol),
at 160°C (the specific transformation temperature of the PBS used as polymer (P)) were measured. Fig. 2 shows that, regardless of the number average molecular weight of the oligomer (O2), its addition to the polymeric composition allows improvement in the fluidity of the composition. This improvement is more significant with the addition of the oligomer with an Mn of 2,600 g/mol ((O2)-4) than that of the one with Mn of 4,100 g/mol ((O2)-8), in particular at low shearing rates.

The following Table 3 provides the viscosities of polymeric compositions at different shearing rates:

**Table 3: viscosities (Pa.s) of polymeric compositions at different shearing rates (s⁻¹)**

| Polymeric composition | Shearing rate (s⁻¹) at 160°C | | | | | | |
|---|---|---|---|---|---|---|---|
| | 1000 | 1700 | 2800 | 4600 | 6400 | 8200 | 10000 |
| PBS (control) | 162 | 119 | 89 | 67 | 55 | 48 | 43 |
| PBS + 3% (O2)-8 | 138 | 103 | 78 | 59 | 49 | 43 | 38 |
| PBS + 10% (O2)-8 | 110 | 82 | 63 | 48 | 40 | 35 | 32 |
| PBS + 20% (O2)-8 | 71 | 56 | 45 | 36 | 31 | 28 | 26 |
| PBS + 3% (O2)-4 | 123 | 93 | 71 | 55 | 46 | 40 | 36 |
| PBS + 10% (O2)-4 | 85 | 67 | 54 | 43 | 38 | 34 | 31 |
| PBS + 20% (O2)-4 | 63 | 51 | 41 | 33 | 29 | 26 | 24 |

The viscosities for different shearing rates:
- of a polymeric composition consisting of a polymer (P) of the PBS type (control),
- of a composition consisting of a polymer (P) of the PBS type and of 10% by weight of the oligomer (O2)-4 of Example 4,
- of a composition consisting of a polymer (P) of the PBS type and of 10% by weight of the oligomer (O2)-5 of Example 5,
- of a composition consisting of a polymer (P) of the PBS type and of 10% by weight of the oligomer (O2)-6 of Example 6,
at 160°C (the specific transformation temperature of the PBS used as a polymer (P)) were measured. Fig. 6 shows a clear improvement in the fluidity of the polymeric composition when the oligomer (O2) is added to the polymeric composition.

The following Table 4 provides the viscosities of polymeric compositions at different shearing rates:

**Table 4: viscosities (Pa.s) of polymeric compositions at different shearing rates (s⁻¹)**

| Shearing Rate (s⁻¹) | PBS+10% (O2)-13 | | Shearing Rate (s⁻¹) | PBS+10% (O2)-14 |
|---|---|---|---|---|
| 1 065 | 63.52 | | 772 | 107.44 |
| 1 421 | 56.31 | | 1 158 | 91.18 |
| 1 776 | 48.64 | | 1 544 | 78.77 |
| 2 664 | 42.26 | | 1 931 | 71.97 |
| 3 196 | 38.88 | | 2 896 | 58.25 |
| 3 551 | 37.92 | | 3 475 | 53.12 |
| 4 439 | 33.73 | | 3 861 | 49.98 |
| 5 327 | 31.59 | | 4 826 | 43.20 |
| 6 037 | 30.07 | | 5 792 | 39.11 |
| | | | 6 564 | 36.23 |
| | | | 7 722 | 33.22 |
| | | | 8 688 | 30.44 |
| | | | 9 653 | 29.16 |
| | | | 10618 | 27.77 |

| Shearing (s⁻¹) | | | PBS+10% (O2)-12 | |
|---|---|---|---|---|
| 741 | | | 98.05 | |
| 1 111 | | | 80.12 | |
| 1 852 | | | 62.31 | |
| 2 779 | | | 51.64 | |
| 3 334 | | | 46.72 | |
| 3 705 | | | 46.57 | |
| 4 631 | | | 40.57 | |
| 5 557 | | | 36.73 | |
| 6 298 | | | 33.88 | |
| 7 410 | | | 31.43 | |
| 8 336 | | | 30.42 | |

| Shearing Rate (s⁻¹) | | | PBS (control) | |
|---|---|---|---|---|
| 672 | | | 314.31 | |
| 896 | | | 270.41 | |
| 1 344 | | | 225.45 | |
| 1 792 | | | 184.34 | |
| 2 240 | | | 160.69 | |
| 3 361 | | | 122.46 | |
| 4 033 | | | 107.82 | |
| 4 481 | | | 101.39 | |
| 5 808 | | | 84.65 | |
| 6 721 | | | 77.27 | |
| 7 618 | | | 70.96 | |
| 8 962 | | | 64.71 | |
| 10 082 | | | 54.89 | |
| 11 202 | | | 51.57 | |

### EXAMPLE 16: Improvement in the viscosity of a polymeric composition consisting of a polymer (P) of the PBS type, of hemp fibers, by adding an oligomer (O2) according to the invention.

The viscosities for different shearing rates:
- of a polymeric composition consisting of a polymer (P) of the PBS type and of 30% by weight of hemp fibers (control),
- of a composition consisting of a polymer (P) of the PBS type, of 30% by weight of hemp fibers and of 10% by weight of the oligomer (O2)-8 of Example 8,
- of a composition consisting of a polymer (P) of the PBS type, of 30% by weight of hemp fibers and of 20% by weight of the oligomer (O2)-8 of Example 8,
- at 160°C (the specific transformation temperature of the PBS used as a polymer (P)) were measured. Fig. 3 shows a clear improvement in the fluidity of the polymeric composition when the oligomer (O2) is added to the polymeric composition. The improvement is all the more significant since the weight proportion of added oligomer (O2) is high.

The viscosities for different shearing rates:
- of a polymeric composition consisting of a polymer (P) of the PBS type and of 30% by weight of hemp fibers (control),
- of a composition consisting of a polymer (P) of the PBS type, of 30% by weight of hemp fibers and of 20% by weight of the oligomer (O2)-8 of Example 8 (Mn = 4,100 g/mol),
- of a composition consisting of a polymer (P) of the PBS type, of 30% by weight of hemp fibers and of 20% by weight of the oligomer (O2)-2 of Example 2 (Mn = 13,107 g/mol),
at 160°C (the specific transformation temperature of the PBS used as a polymer (P)) were measured. Fig. 4 shows that, regardless of the number average molecular weight of the oligomer (O2), its addition to the polymeric composition allows improvement in the fluidity of the composition. This improvement is more significant with the addition of the oligomer with an Mn of 4,100 g/mol ((O2)-4) than of that with an Mn of 13,107 g/mol ((O2)-8), in particular at low shearing rates.

The following Table 5 provides the viscosities (Pa.s) at different shearing rates of polymeric compositions.

**Table 5: viscosities (Pa.s) of polymeric compositions at different shearing rates (s⁻¹)**

| Shearing Rate (s⁻¹) | PBS +30% fibers (control) |
|---|---|
| 672 | 314.31 |
| 896 | 270.41 |
| 1344 | 225.45 |
| 1792 | 184.34 |
| 2240 | 160.69 |
| 3361 | 122.46 |
| 4033 | 107.82 |
| 4481 | 101.39 |
| 5808 | 84.65 |
| 6721 | 77.27 |
| 7618 | 70.96 |
| 8962 | 64.71 |
| 10082 | 54.89 |
| 11202 | 51.57 |

| Shearing rate (s⁻¹) | PBS + 30% fibers + 10% (O2)-8 |
|---|---|
| 574 | 209.89 |
| 719 | 191.87 |
| 1079 | 160.69 |
| 1438 | 133.66 |
| 1798 | 117.27 |
| 2495 | 101.33 |
| 3236 | 87.30 |
| 3595 | 83.52 |
| 4494 | 72.89 |
| 5794 | 64.07 |

| Shearing rate (s⁻¹) | PBS + 30% fibers + 20% (O2)-8 |
|---|---|
| 557 | 141.69 |
| 1 000 | 109.25 |
| 1 502 | 88.86 |
| 1 877 | 80.74 |
| 2 529 | 71.04 |
| 3 105 | 64.43 |
| 3 754 | 59.43 |
| 4 693 | 53.52 |

| Shearing rate (s⁻¹) | PBS + 30% fibers + 20% (O2)-2 |
|---|---|
| 807 | 154.10 |
| 1211 | 129.19 |
| 1614 | 111.31 |
| 2018 | 98.77 |
| 3027 | 80.60 |
| 3632 | 68.96 |
| 4036 | 63.67 |
| 5044 | 55.92 |
| 6053 | 48.18 |
| 6860 | 46.57 |
| 8071 | 42.88 |

### EXAMPLE 17: Improvement in the viscosity of a polymeric composition consisting of a polymer (P) of the PLA type by addition of an oligomer (O2) according to the invention.

Polymer (P) of the PLA type came from NatureWorks ® (grade 3251D).

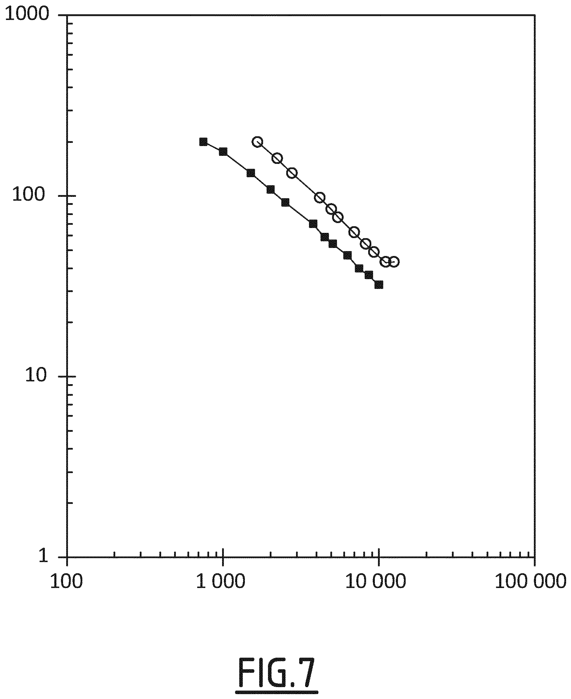

The viscosities for different shearing rates:
- of a polymeric composition consisting of a polymer (P) of the PLA type (control),
- of a composition consisting of a polymer (P) of the PLA type and of 10% by weight of the oligomer (O2)-12 of Example 12,
at 160°C (the specific transformation temperature of the PLA used as a polymer (P)) were measured. Fig. 7 shows a clear improvement in the fluidity of the polymeric composition when the oligomer (O2)-12 is added to the polymeric composition.

The following Table 6 provides the viscosities (Pa.s) at different shearing rates of polymeric compositions:

**Table 6: viscosities (Pa.s) of polymeric compositions at different shearing rates (s⁻¹)**

| Shearing Rate (s⁻¹) | PLA (control) |
|---|---|
| 1 655 | 200.61 |
| 2 206 | 162.21 |
| 2 758 | 134.52 |
| 4 137 | 98.07 |
| 4 964 | 84.22 |
| 5 516 | 76.72 |
| 6 895 | 62.94 |
| 8 274 | 54.04 |
| 9 377 | 49.25 |
| 11 032 | 43.58 |
| 12410 | 43.10 |

| Shearing Rate (s⁻¹) | PLA+ 10%(O2)-12 |
|---|---|
| 756 | 200.55 |
| 1 008 | 176.58 |
| 1 512 | 133.07 |
| 2016 | 108.67 |
| 2 521 | 92.25 |
| 3 781 | 69.46 |
| 4 537 | 59.78 |
| 5 041 | 54.39 |
| 6 301 | 46.67 |
| 7 562 | 39.84 |
| 8 570 | 36.27 |
| 10 082 | 32.14 |

### EXAMPLE 18: Ageing of polymeric compositions consisting of a polymer (P) of the PBS type and of an oligomer (O2) according to the invention.

Polymeric compositions have been submitted to a temperature of 60°C at 70% hygrometric ratio in a climatic oven. The ratio of the number average molecular weight at instant t over the number average molecular weight at t = 0 (t = 0 being the time before the heat treatment) versus time in days:
- of a polymeric composition consisting of a polymer (P) of the PBS type (control),
- of a composition consisting of a polymer (P) of the PBS type and of 10% by weight of the oligomer (O2)-8 of Example 8,
- of a composition consisting of a polymer (P) of the PBS type and of 20% by weight of the oligomer (O2)-8 of Example 8,
- of a composition of a polymer (P) of the PBS type and of 20% by weight of the oligomer (O2)-2 of Example 2,
was measured. The closer this ratio is to 1, the more the polymeric composition is stable. Fig. 5 shows that by adding an oligomer (O2) to the polymeric composition, it is possible to improve the stability of the composition, regardless of the polyepoxide used for preparing the oligomer (O2) (trimethylolpropane triglycidyl ether for (O2)-8 and epoxidized flax oil for (O2)-2). The improvement is all the more significant since the weight proportion of added oligomer (O2) is high.

The following table 7 provides the values of said ratio versus time.

**Table 7: ratio of the number average molecular weight of instant t over the number average molecular weight at t = 0 versus time in days.**

| Time (days) | Mn(t)/M(t=0) | | | |
|---|---|---|---|---|
| | PBS | PBS + 10% (O2)-8 | PBS + 20% (O2)-8 | PBS + 20% (O2)-2 |
| 0 | 1.00 | 1.00 | 1.00 | 1.00 |
| 1 | 0.93 | 0.96 | 0.97 | 0.96 |
| 2 | 0.90 | 0.94 | 0.95 | 0.98 |
| 3 | 0.87 | 0.92 | 0.94 | 0.95 |
| 5 | 0.81 | 0.88 | 0.91 | 0.92 |
| 6 | 0.78 | 0.85 | 0.89 | 0.91 |
| 7.7 | 0.73 | 0.81 | 0.88 | 0.90 |
| 9 | 0.70 | 0.79 | 0.83 | 0.85 |
| 13 | 0.61 | 0.71 | 0.76 | 0.8 |
| 17 | 0.52 | 0.63 | 0.70 | 0.73 |
| 21 | 0.46 | 0.57 | 0.61 | 0.63 |
| 24 | 0.41 | 0.51 | 0.57 | 0.60 |
| 27 | 0.35 | 0.46 | 0.52 | 0.54 |

Although only some exemplary embodiments of the inventions have been described in detail above, those skilled in the art will readily appreciated that many modifications of the exemplary embodiments are possible without departing from the scope of invention as defined by the attached set of claims.

## Claims

1. The use of an aliphatic polyester oligomer (O2) having a terminal group comprising at least one epoxide function as an additive in a polymeric composition for fluidifying said composition.

2. The use according to claim 1, **characterized in that** the aliphatic polyester oligomer (O2) having a terminal group comprising at least one epoxide function may be obtained by a method comprising the steps consisting of:
a) preparing a reaction mixture comprising:
- an aliphatic polyester oligomer (O1) having at least one terminal carboxylic acid function,
- a polyepoxide,
- a catalyst,
said reaction mixture being free from polysaccharide,
b) heating said reaction mixture to a temperature comprised between the melting point of the aliphatic polyester oligomer (O1) and 250°C and at a pressure comprised between 0.001 bars and ambient pressure,
whereby at least one terminal carboxylic acid function of the aliphatic polyester oligomer (O1) reacts with at least one epoxide function of the polyepoxide in order to form an aliphatic polyester oligomer (O2) having a terminal group comprising at least one epoxide function,
c) recovering the aliphatic polyester oligomer (O2) having a terminal group comprising at least one epoxide function.

3. The use according to claim 1 or 2, **characterized in that** the weight proportion of aliphatic polyester oligomer (O2) in the polymeric composition is 1 to 30%, preferably from 2% to 25%.

4. The use according to anyone of claims 1 to 3, **characterized in that** at the specific transformation temperature of the polymer (P) of the polymeric composition, the viscosity of the polymeric composition is lowered by 10% to 80% relatively to the viscosity at the same temperature of a polymeric composition free from said additive, wherein the viscosities are measured according to ISO 11443 of 2005.

5. The use according to any of claims 1 to 4, wherein the polyester oligomer is a poly(butylene succinate) oligomer.

6. The use of according to any of claims 2 to 5, wherein the polyepoxide applied in the preparation method is selected from a compound comprising at least two glycidyl ether functions, such as trimethylolpropane triglycidyl ether, trimethylol triglycidyl ether, triglycidyl poly(propylene glycol) ether, and/or an epoxidized oil, typically epoxidized flax oil, epoxidized soybean oil and epoxidized rapeseed oil.

7. The use according to any of claims 1 to 6, wherein the polymeric composition comprises, in addition to the aliphatic polyester oligomer additive (O2), at least one other polymer (P), preferably an aliphatic polyester such as poly(butylene succinate) or poly(lactic acid), and optionally natural fibers.

8. A method for preparing a poly(butylene succinate) (O2) having a terminal group comprising at least one epoxide function, comprising the steps of:
a) preparing a reaction mixture comprising:
- a poly(butylene succinate) oligomer (O1),
- a polyepoxide,
- a catalyst,
said reaction mixture being free from polysaccharide,
b) heating said reaction mixture to a temperature comprised between the melting point of the poly(butylene succinate) oligomer (O1) and 250°C and at a pressure comprised between 0.001 bars and ambient pressure,
whereby at least one terminal carboxylic acid function of the poly(butylene succinate) oligomer (O1) reacts with at least one epoxide function of the polyepoxide in order to form a poly(butylene succinate) oligomer (O2) having a terminal group comprising at least one epoxide function,
c) recovering the poly(butylene succinate) oligomer (O2) having a terminal group comprising at least one epoxide function.

9. The preparation method according to claim 8, wherein the polyepoxide is selected from a compound comprising at least two glycidyl ether functions, such as trimethylolpropane triglycidyl ether, trimethylol triglycidyl ether, triglycidyl poly(propylene glycol) ether, and/or an epoxidized oil, typically epoxidized flax oil, epoxidized soja oil, epoxidized colza oil and epoxidized rapeseed oil.

10. A poly(butylene succinate) oligomer (O2) having a terminal group comprising at least one epoxide function obtainable by the method according to any of claims 8 to 9.

11. A polymeric composition comprising:
- a poly(butylene succinate) oligomer (O2) having a terminal group comprising at least one epoxide function according to claim 10, and
- at least one other polymer (P), preferably an aliphatic polyester such as poly(butylene succinate) or poly(lactic acid),
- optionally natural fibers.

12. A method for preparing a polymeric composition comprising a step of:
i) preparing a reaction mixture comprising:
- a poly(butylene succinate) oligomer (O2) having a terminal group comprising at least one epoxide function according to claim 10, and
- at least one other polymer (P), preferably an aliphatic polyester, such as poly(butylene succinate) or poly(lactic acid),
- optionally natural fibers,
ii) extruding the reaction mixture at a temperature comprised between 120 and 200°C, whereby the polymer (P) optionally reacts with at least some of the epoxide functions of the poly(butylene succinate) oligomer (O2),
iii) recovering the polymeric composition.

13. A polymeric composition obtainable by the method according to claim 12.

14. The use of a polymeric composition according to claim 11 or 13 for preparing plastic articles.

15. A plastic article comprising a polymeric composition according to claim 11 or 13.

## Patentansprüche

1. Die Verwendung eines aliphatischen Polyesteroligomers (O2), das eine terminale Gruppe aufweist, die mindestens eine Epoxid-Funktion umfasst, als ein Additiv in einer Polymer-Zusammensetzung zum Verflüssigen der Zusammensetzung.

2. Die Verwendung gemäß Anspruch 1, **dadurch gekennzeichnet, dass** das aliphatische Polyesteroligomer (O2), das eine terminale Gruppe aufweist, die mindestens eine Epoxid-Funktion umfasst, durch ein Verfahren erhalten werden kann, umfassend die Schritte bestehend aus:
a) Herstellen einer Reaktionsmischung, umfassend:
- ein aliphatisches Polyesteroligomer (O1), das mindestens eine terminale Carbonsäurefunktion aufweist,
- ein Polyepoxid,
- einen Katalysator,
wobei die Reaktionsmischung frei von Polysaccharid ist,
b) Erwärmen der Reaktionsmischung auf eine Temperatur, die zwischen dem Schmelzpunkt des aliphatischen Polyesteroligomers (O1) und 250 °C liegt und bei einem Druck, der zwischen 0,001 bar und Umgebungsdruck liegt,
wobei mindestens eine terminale Carbonsäurefunktion des aliphatischen Polyesteroligomers (O1) mit mindestens einer Epoxidfunktion des Polyepoxids reagiert, um ein aliphatisches Polyesteroligomer (O2), das eine terminale Gruppe aufweist, die mindestens eine Epoxidfunktion umfasst, zu bilden,
c) Rückgewinnen des aliphatischen Polyesteroligomers (O2), das eine terminale Gruppe aufweist, die mindestens eine Epoxidfunktion umfasst.

3. Die Verwendung gemäß Anspruch 1 oder 2, **dadurch gekennzeichnet, dass** der Gewichtsanteil des aliphatischen Polyesteroligomers (O2) in der Polymer-Zusammensetzung 1 bis 30%, bevorzugt 2% bis 25% ist.

4. Die Verwendung gemäß einem der Ansprüche 1 bis 3, **dadurch gekennzeichnet, dass** bei der spezifischen Umwandlungstemperatur des Polymers (P) der Polymer-Zusammensetzung die Viskosität der Polymer-Zusammensetzung um 10% bis 80% verringert wird, relativ zur Viskosität bei der gleichen Temperatur einer Polymer-Zusammensetzung, die frei von dem Additiv ist, wobei die Viskositäten gemäß ISO 11443 aus 2005 gemessen werden.

5. Die Verwendung gemäß einem der Ansprüche 1 bis 4, wobei das Polyesteroligomer ein Poly(butylensuccinat)oligomer ist.

6. Die Verwendung gemäß einem der Ansprüche 2 bis 5, wobei das Polyepoxid, das in dem Herstellungsverfahren verwendet wurde, ausgewählt ist aus einer Verbindung umfassend mindestens zwei Glycidyletherfunktionen, wie Trimethylolpropantriglycidylether, Trimethyloltriglycidylether, Triglycidylpoly(propylenglycol)ether, und/oder ein epoxidiertes Öl, typischerweise epoxidiertes Leinöl, epoxidiertes Sojabohnenöl und epoxidiertes Rapssamenöl.

7. Die Verwendung gemäß einem der Ansprüche 1 bis 6, wobei die Polymer-Zusammensetzung zusätzlich zu dem aliphatischen Polyesteroligomer-Additiv (O2) mindestens ein anderes Polymer (P), bevorzugt einen aliphatischen Polyester wie Poly(butylensuccinat) oder Poly(milchsäure) und gegebenenfalls natürliche Fasern umfasst.

8. Ein Verfahren zum Herstellen eines Poly(butylensuccinats) (O2), das eine terminale Gruppe aufweist, die mindestens eine Epoxidfunktion enthält, umfassend die Schritte:
a) Herstellen einer Reaktionsmischung, umfassend:
- ein Poly(butylensuccinat)oligomer (O1),
- ein Polyepoxid,
- einen Katalysator,
wobei die Reaktionsmischung frei von Polysaccharid ist,
b) Erwärmen der Reaktionsmischung auf eine Temperatur, die zwischen dem Schmelzpunkt des Poly(butylensuccinat)oligomers (O1) und 250 °C liegt und bei einem Druck, der zwischen 0,001 bar und Umgebungstemperatur liegt,
wobei mindestens eine terminale Carbonsäurefunktion des Poly(butylensuccinat)oligomers (O1) mit mindestens einer Epoxidfunktion des Polyepoxids reagiert, um ein Poly(butylensuccinat)oligomer (O2), das eine terminale Gruppe aufweist, die mindestens eine Epoxidfunktion umfasst, zu bilden,
c) Rückgewinnen des Poly(butylensuccinat)oligomers (O2), das eine terminale Gruppe aufweist, die mindestens eine Epoxidfunktion umfasst.

9. Das Herstellungsverfahren gemäß Anspruch 8, wobei das Polyepoxid ausgewählt ist aus einer Verbindung umfassend mindestens zwei Glycidyletherfunktionen, wie Trimethylolpropantriglycidylether, Trimethyloltriglycidylether, Triglycidylpoly(propylenglykol)ether, und/oder ein epoxidiertes Öl, typischerweise epoxidiertes Leinöl, epoxidiertes Sojaöl, epoxidiertes Kolzaöl und epoxidiertes Rapssamenöl.

10. Ein Poly(butylensuccinat)oligomer (O2), das eine terminale Gruppe aufweist, die mindestens eine Epoxidfunktion umfasst, die durch das Verfahren gemäß einem der Ansprüche 8 oder 9 erhältlich ist.

11. Eine Polymer-Zusammensetzung, umfassend:
- ein Poly(butylensuccinat)oligomer (O2), das eine terminale Gruppe aufweist, die mindestens eine Epoxidfunktion gemäß Anspruch 10 umfasst, und
- mindestens ein anderes Polymer (P), bevorzugt ein aliphatischer Polyester wie Poly(butylensuccinat) oder Poly(milchsäure),
- gegebenenfalls natürliche Fasern.

12. Ein Verfahren zum Herstellen einer Polymer-Zusammensetzung, umfassend einen Schritt:
i) Herstellen einer Reaktionsmischung, umfassend:
- ein Poly(butylensuccinat)oligomer (O2), das eine terminale Gruppe aufweist, die mindestens eine Epoxidfunktion gemäß Anspruch 10 umfasst, und
- mindestens ein anderes Polymer (P), bevorzugt ein aliphatischer Polyester wie Poly(butylensuccinat) oder Poly(milchsäure),
- gegebenenfalls natürliche Fasern,
ii) Extrudieren der Reaktionsmischung bei einer Temperatur, die zwischen 120 und 200 °C liegt, wobei das Polymer (P) gegebenenfalls mit mindestens einigen der Epoxidfunktionen des Poly(butylensuccinat)oligomers (O2) reagiert,
iii) Rückgewinnen der polymeren Zusammensetzung.

13. Eine Polymer-Zusammensetzung, erhältlich durch das Verfahren gemäß Anspruch 12.

14. Die Verwendung einer Polymer-Zusammensetzung gemäß Anspruch 11 oder 13 zum Herstellen von Kunststoffgegenständen.

15. Ein Kunststoffgegenstand, umfassend eine Polymer-Zusammensetzung gemäß Anspruch 11 oder 13.

## Revendications

1. Utilisation d'un oligomère polyester aliphatique (O2) ayant un groupe terminal comprenant au moins une fonction époxyde comme additif dans une composition polymérique pour fluidifier ladite composition.

2. Utilisation selon la revendication 1, **caractérisée en ce que** l'oligomère polyester aliphatique (O2) ayant un groupe terminal comprenant au moins une fonction époxyde est susceptible d'être obtenu par un procédé comprenant les étapes consistant à:
a) préparer un mélange réactionnel comprenant :
- un oligomère polyester aliphatique (O1) ayant au moins une fonction acide carboxylique terminale,
- un polyépoxyde,
- un catalyseur,
ledit mélange réactionnel étant exempt de polysaccharide,
b) chauffer ledit mélange réactionnel à une température comprise entre le point de fusion de l'oligomère polyester aliphatique (O1) et 250°C et à une pression comprise entre 0,001 bar et la pression ambiante,
ce par quoi au moins une fonction acide carboxylique terminale de l' oligomère polyester aliphatique (O1) réagit avec au moins une fonction époxyde du polyépoxyde pour former un oligomère polyester aliphatique (O2) ayant un groupe terminal comprenant au moins une fonction époxyde,
c) récupérer l'oligomère polyester aliphatique (O2) ayant un groupe terminal comprenant au moins une fonction époxyde.

3. Utilisation selon la revendication 1 ou 2, **caractérisée en ce que** la proportion en poids d'oligomère polyester aliphatique (O2) dans la composition polymérique est de 1 à 30%, de préférence de 2 à 25%.

4. Utilisation selon l'une quelconque des revendications 1 à 3, **caractérisée en ce que**, à la température de transformation spécifique du polymère (P) de la composition polymérique, la viscosité de la composition polymérique est diminuée de 10% à 80% par rapport à la viscosité à la même température d'une composition polymérique exempte dudit additif, où les viscosités sont mesurées selon ISO 11443 de 2005.

5. Utilisation selon l'une quelconque des revendications 1 à 4, dans laquelle l'oligomère polyester est un oligomère poly(butylène succinate).

6. Utilisation selon l'une quelconque des revendications 2 à 5, dans laquelle le polyépoxyde utilisé dans le procédé de préparation est choisi parmi un composé comprenant au moins deux fonctions éther de glycidyle, tel que le triméthylolpropane triglycidyle éther, le triméthylol triglycidyle éther, le triglycidyle poly(propylèneglycol) éther, et/ou une huile époxydée, typiquement l'huile de lin époxydée, l'huile de soja époxydée et l'huile de colza époxydée.

7. Utilisation selon l'une quelconque des revendications 1 à 6, dans laquelle la composition polymérique comprend, en plus de l'additif oligomère polyester aliphatique (O2), au moins un autre polymère P), de préférence un polyester aliphatique tel que le poly(butylène succinate) ou le poly(acide lactique), et éventuellement des fibres naturelles.

8. Procédé de préparation d'un poly(butylène succinate) (O2) ayant un groupe terminal comprenant au moins une fonction époxyde comprenant les étapes de:
a) préparer un mélange réactionnel comprenant :
- un oligomère poly(butylène succinate) (O1),
- un polyépoxyde,
- un catalyseur,
ledit mélange réactionnel étant exempt de polysaccharide,
b) chauffer ledit mélange réactionnel à une température comprise entre le point de fusion de l'oligomère poly(butylène succinate) (O1) et 250°C et à une pression comprise entre 0,001 bar et la pression ambiante,
ce par quoi au moins une fonction acide carboxylique terminale de l'oligomère poly(butylène succinate) (O1) réagit avec au moins une fonction époxyde du polyépoxyde pour former un oligomère poly(butylène succinate) (O2) ayant un groupe terminal comprenant au moins une fonction époxyde,
c) récupérer l'oligomère poly(butylène succinate) (O2) ayant un groupe terminal comprenant au moins une fonction époxyde.

9. Procédé de préparation selon la revendication 8, dans lequel le polyépoxyde est choisi parmi un composé comprenant au moins deux fonctions éther de glycidyle, tel que le triméthylolpropane triglycidyle éther, le triméthylol triglycidyle éther, le triglycidyle poly(propylèneglycol) éther, et/ou une huile époxydée, typiquement l'huile de lin époxydée, l'huile de soja époxydée et l'huile de colza époxydée.

10. Oligomère poly(butylène succinate) (O2) ayant un groupe terminal comprenant au moins une fonction époxyde susceptible d'être obtenu par le procédé selon l'une quelconque des revendications 8 à 9.

11. Composition polymérique comprenant :
- un oligomère poly(butylène succinate) (O2) ayant un groupe terminal comprenant au moins une fonction époxyde selon la revendication 10, et
- au moins un autre polymère (P), de préférence un polyester aliphatique tel qu'un poly(butylène succinate) ou un poly(acide lactique),
- éventuellement des fibres naturelles.

12. Procédé de préparation d'une composition polymérique, comprenant une étape de :
i) préparer un mélange réactionnel comprenant:
- un oligomère poly(butylène succinate) (O2) ayant un groupe terminal comprenant au moins une fonction époxyde selon la revendication 10, et
- au moins un autre polymère (P), de préférence un polyester aliphatique tel qu'un poly(butylène succinate) ou un poly(acide lactique),
- éventuellement des fibres naturelles.
ii) extruder le mélange réactionnel à une température comprise entre 120 et 200°C,
ce par quoi le polymère (P) réagit avec au moins certaines des fonctions époxyde de l'oligomère poly(butylène succinate) (O2),
iii) récupérer la composition polymérique.

13. Composition polymérique susceptible d'être obtenu par le procédé selon la revendication 12.

14. Utilisation d'une composition polymérique selon la revendication 11 ou 13 pour la préparation d'articles en plastique.

15. Article en plastique comprenant une composition polymérique selon la revendication 11 ou 13.
